# EUROPEAN PATENT APPLICATION

(11) **EP 4 563 288 A1**
(43) Date of publication of application: **04.06.2025**
(21) Application number: 24208171.9
(22) Date of filing: 22.10.2024
(51) Int. Cl.: B25F 5/00

(54) **POWER TOOL WITH A GYRO SENSOR MODULE FOR ERROR CONDITION DETECTION**

(30) Priority: 29.11.2023 GB 202318184
(71) Applicant: Black & Decker, Inc., New Britain, CT 06053 (US)
(72) Inventor: KADLECEK, Daniel, 65474 Bischofsheim (DE); LANGHAMMER, Heiko, 65510 Idstein (DE); THIEME, Rene, 01589 Riesa (DE)
(74) Representative: SBD IPAdmin

(57) **Abstract**

A power tool comprises a housing, a motor mounted in the housing, and a too holderl operatively coupled to the motor. The power tool also includes a gyro sensor module mounted on the housing, which comprises at least one gyro sensor configured to detect angular rotation of the housing about a first axis and angular inclination of the first axis from a reference first axis. A controller is configured to receive sensor signals from the gyro sensor module, determine a first error condition of the power tool based on a threshold angular velocity being exceeded, and determine a second error condition of the power tool based on a threshold angular inclination being exceeded.

## Description

### Field

The technology relates to the field of power tools, specifically to safety features and error detection mechanisms in power tools such as routers, drills, and saws. The technology aims to improve the safety and efficiency of power tool operation by detecting and preventing potential hazards and improper usage during operation.

### Background

Power tools, such as routers, are commonly used for shaping and cutting workpieces in various applications, including woodworking, metalworking, and plastic fabrication. Routers typically include a housing containing a motor, a cutting tool operatively coupled to the motor, and handles for the user to grip and control the tool during operation. The cutting tool, such as a router bit, is designed to rotate at high speeds to remove material from the workpiece as the user moves the router along the desired path.

One of the challenges associated with using routers and other power tools is the occurrence of kickback events. Kickback occurs when the rotating cutting tool gets caught in the workpiece, causing the tool to stop rotating suddenly. This sudden stop can result in the router housing and base, which are mounted on the cutting tool, to rotate rapidly and unexpectedly. The user, who is holding the router by the handles, may be injured by this sudden rotation. Additionally, the workpiece may be damaged due to the loss of control during the kickback event.

Another issue with using routers is the improper gripping and tilting of the tool during operation. If the user is not gripping the router properly or is tilting it, they may not have full control over the tool. This lack of control can make it more likely for the user to let go of the router during a kickback event, resulting in further loss of control and potential damage or injury.

Various attempts have been made to address the problems associated with kickback events in power tools. For example, and as shown in US 10,589,413, some power tools include control systems that monitor the rotational motion of the housing and the current drawn by the motor to detect and respond to kickback events. However, these systems typically only measure the angular speed of the tool in the rotational axis, which may not be sufficient for detecting kickback events in routers, where the tool can flip around in all three axes.

Furthermore, e.g. as shown in EP3294503 some power tools employ actuators and sensors to correct for the tilt of the base with respect to the workpiece. While these systems can help maintain proper tool orientation during operation, they may be complex and expensive to implement. Additionally, they may not encourage the user to learn proper tool handling techniques, as the system automatically corrects for their mistakes.

There remains a need for an improved power tool, such as a router, that can effectively detect and respond to kickback events and other error conditions, while also promoting proper tool handling and control by the user.

### Summary

According to a first aspect of the disclosure, a power tool is provided that comprises a housing, a motor mounted in the housing, a tool holder operatively coupled to the motor, a gyro sensor module mounted on the housing, and a controller. The gyro sensor module includes at least one gyro sensor configured to detect angular rotation of the housing about a first axis and angular inclination of the first axis from a reference first axis. The controller is configured to receive sensor signals from the gyro sensor module, determine a first error condition of the power tool based on a threshold angular velocity being exceeded, and determine a second error condition of the power tool based on a threshold angular inclination being exceeded. This aspect of the disclosure provides the advantage of improved safety and control during the operation of the power tool.

Optionally in some examples, the gyro sensor module further comprises a second gyro sensor configured to detect angular rotation of the housing about a second axis and angular inclination of the second axis from a reference second axis. This provides the advantage of increased accuracy in detecting the power tool's movement and orientation.

Optionally in some examples, the gyro sensor module further comprises a third gyro sensor configured to detect angular rotation of the housing about a third axis and angular inclination of the third axis from a reference third axis. This further enhances the accuracy of the power tool's movement and orientation detection.

Optionally in some examples there is an accelerometer sensor module mounted on the housing. The accelerometer sensor module is configured to detect linear acceleration of the housing with respect to a workpiece in a direction parallel to the first axis, the second axis, and/or the third axis. This provides the advantage of detecting improper handling of the power tool with respect to the workpiece.

Optionally in some examples, the controller is further configured to determine a third error condition of the power tool based on a threshold linear acceleration being exceeded. This provides the advantage of increased safety by detecting potentially dangerous movements of the power tool.

Optionally in some examples this is a notification module configured to indicate an error condition of the power tool in response to a notification signal received from the controller based on a detected error condition of the power tool. This provides the advantage of alerting the user to potential issues during the operation of the power tool, allowing for corrective action to be taken.

Optionally in some examples, the notification module comprises at least one of an LED, an LCD display, a buzzer or speaker, and a haptic feedback device. This provides the advantage of versatile and customizable notification options for the user.

Optionally in some examples the power tool further comprises an automatic shut-off module configured to stop the motor in response to a control signal received from the controller in response to an error condition of the power tool being detected. This provides the advantage of increased safety by automatically stopping the power tool in potentially dangerous situations.

According to a second aspect of the disclosure, a method of using a power tool having a gyro sensor module is provided. The method includes powering on the power tool and the gyro sensor module, calibrating the gyro sensor module and determining the reference first axis for the power tool, receiving sensor signals from the gyro sensor module at a controller during operation of the power tool, determining a first error condition of the power tool based on a threshold angular velocity being exceeded, determining a second error condition of the power tool based on a threshold angular inclination being exceeded, and indicating the first error condition and/or the second error condition to a user. This aspect of the disclosure provides the advantage of improved safety and control during the operation of the power tool.

Optionally in some examples, the method further comprises stopping the motor in response to a control signal received from the controller in response to an error condition of the power tool being detected. This provides the advantage of increased safety by automatically stopping the power tool in potentially dangerous situations.

Optionally in some examples, the method further comprises detecting linear acceleration of the housing with respect to the workpiece in a direction parallel to a first axis, a second axis, and/or a third axis using an accelerometer sensor module mounted on the housing. This provides the advantage of detecting improper handling of the power tool with respect to the workpiece.

Optionally in some examples, the method further comprises determining a third error condition of the power tool based on a threshold linear acceleration being exceeded. This provides the advantage of increased safety by detecting potentially dangerous movements of the power tool.

### Brief Description of the Drawings

Examples are described in more detail below with reference to the appended drawings.
Figure 1 is a front view of a power tool according to an example;
Figure 2 is a front cross-sectional view of a power tool according to an example;
Figure 3 is a plan view of a power tool according to an example;
Figure 4 is a side view of a power tool according to an example;
Figure 5 shows a perspective view of a power tool with axes of rotation and angle of inclination according to an example;
Figure 6 shows a schematic example of a power tool according to an example;
Figure 7 shows a method of determining a first error condition of the power tool based on determining angular velocity of the power tool in multiple axes;
Figure 8 shows a method of determining a second error condition of the power tool based on determining angle of inclination of the power tool in multiple axes; and
Figure 9 shows a method of determining a third error condition of the power tool based on determining linear acceleration of the power tool in multiple axes.

### Detailed Description

The detailed description set forth below provides information and examples of the disclosed technology with sufficient detail to enable those skilled in the art to practise the disclosure.

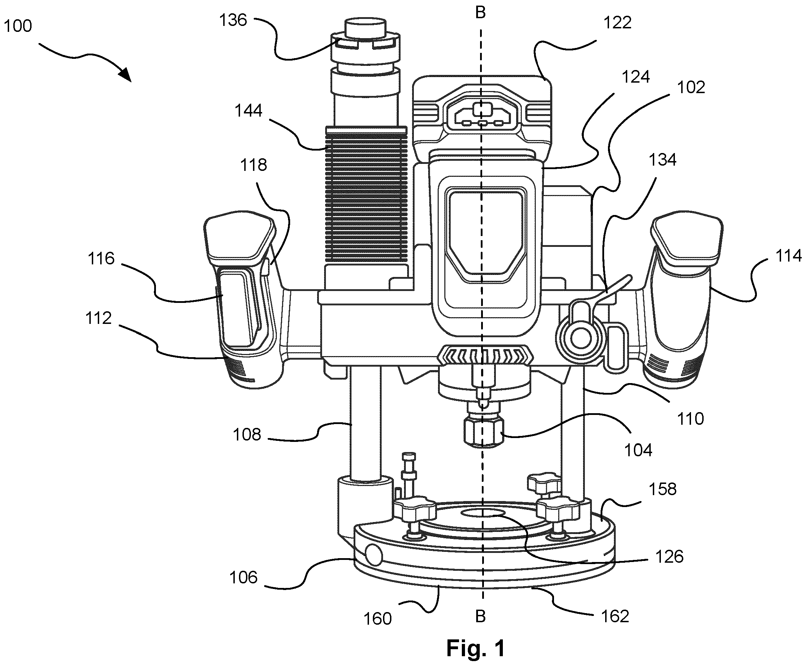

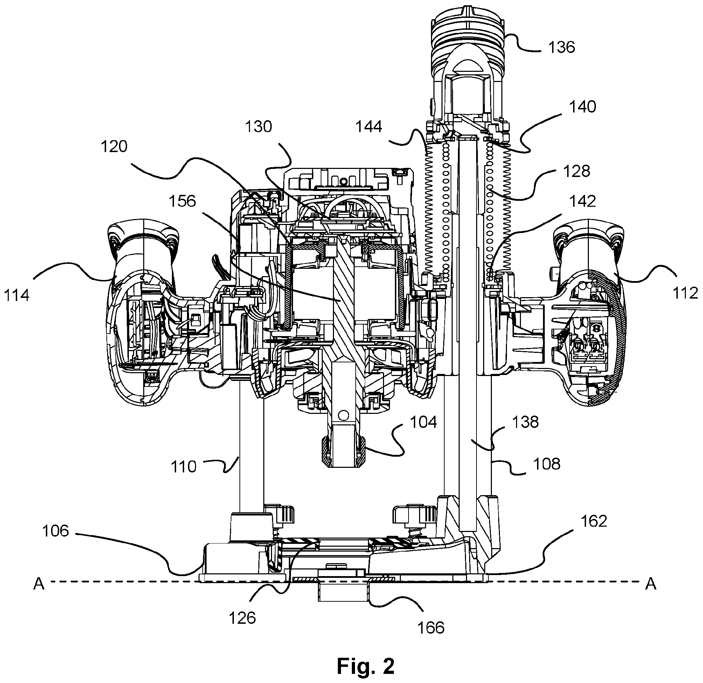

Figure 1 shows a front view of a power tool 100 according to an example. Figures 2, 3 and 4 also respectively show a front cross-sectional view, a plan view, and a side view of the same power tool 100. The power tool 100 as shown in Figure 1 is a router 100. Whilst the power tool 100 can be a router 100, in other examples any other type of power tool 100 can be used such as a plunge saw, a drill, a multitool, or an oscillating tool mounted on a plunge base portion 106. Hereinafter, the term power tool 100 will be used.

The power tool 100 comprises a housing 102. The housing 102 comprises a clam shell type construction having two halves which are fastened together. The halves of the housing 102 are fastened together with screws but in alternative examples any suitable means for fastening the housing 102 together may be used such as glue, clips, bolts and so on. For the purposes of clarity, the fastenings in the housing 102 are not shown.

A motor 120 (best shown in Figure 2) is mounted in the housing 102 for driving a tool holder, e.g. a collet 104. The motor 120 is optionally mounted within a motor housing (not shown). The motor housing may be mounted to the housing 102. The motor 120 may be any suitable type of electric motor, such as a brushed or brushless DC motor, an AC motor, a stepper motor, or other types of motors known in the art. Optionally, the motor housing is mounted to the housing 102 via dampeners e.g. rubber mounts (not shown) to reduce the vibration transmitted from the motor 120 to the housing 102 and, in turn, to the user.

The motor 120 is operatively connected to the collet 104 through a drive shaft 156, which transmits the rotational movement of the motor 120 directly to the tool holder e.g., the collet 104. The drive shaft 156 may comprise one or more bearings to decrease friction and ensure smooth rotation of the collet 104.

The motor 120 may comprise various cooling components, such as fans or cooling fins, to dissipate heat generated during operation. These cooling components may be encased within the motor housing or the housing 102 of the power tool 100 and may be integrated into the design of the motor 120 itself.

A cutting tool bit (not shown) can be mounted in the collet 104 for engaging a workpiece (not shown). Typically, the cutting tool is a cutting tool bit for a power tool 100. In some examples the cutting tool bit is a router bit such as an upcut spiral router bit, a downcut spiral router bit, a straight router bit, a cove router bit, a chamfer router bit, a rabbeting router bit, a roundover router bit, a beading router bit, an ogee router bit or a panel raising router bit. Any other suitable router cutting tool bit can be mounted in the collet 104.

The collet 104 may be a cylindrical component that contains an inner bore to accommodate and grip the shank of the cutting tool bit. The collet 104 is known and will not be discussed in any further detail.

As shown in Figure 1, the power tool 100 comprises a base portion 106 for engaging the workpiece. The base portion 106 comprises a base aperture 126 through which the cutting tool bit can project e.g., when the user plunges the housing 102 towards the base portion 106 and then the cutting tool bit projects through the base aperture 126. The base portion 106 is mounted to the housing 102 via first and second guide posts 108, 110. The first and second guide posts 108, 110 are slidably mounted to the housing 102 for adjusting the relative distance of the base portion 106 from the collet 104. In some examples, the first and second guide posts 108, 110 are removable. This means that the power tool 100 can be used without the base portion 106 engaging the workpiece.

The housing 102 comprises a first handle 112 and a second handle 114 for the user to grip during operation. The first handle 112 and the second handle 114 have a different arrangement. In some examples, a main trigger switch 116 for operating the power tool 100 is mounted within the first handle 112. In some examples, the first handle 112 also comprises a lock button 118 for selectively locking the main trigger switch 116 into an "ON" status. This means that the user does not have to constantly keep pressure maintained on the main trigger switch 116 during operation of the power tool 100. In some examples, the main trigger switch 116 can be replaced with a momentary switch (not shown).

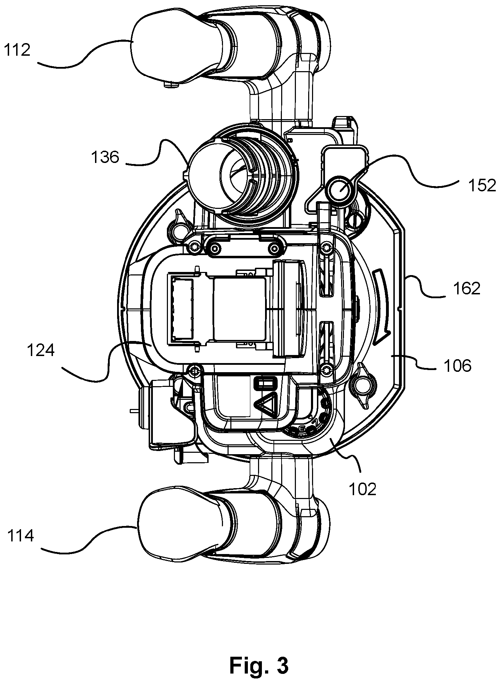

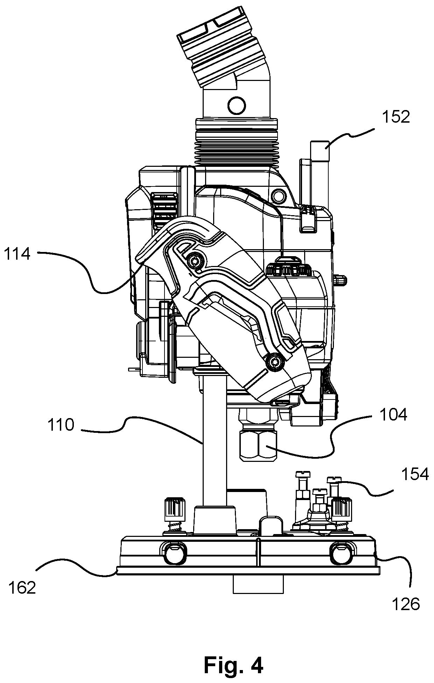

The user can hold both the first handle 112 and the second handle 114 to grip the power tool 100 during operation thereof. The first handle 112 and the second handle 114 optionally comprise a clam shell arrangement. As shown in Figures 3 and 4, the first handle 112 and the second handle 114 comprise a "T-shaped" profile. This means that the first handle 112 and the second handle 114 have an ergonomic profile and are comfortable when the user wraps their fingers and thumbs around the first and second handles 112, 114.

Indeed, the first handle 112 and the second handle 114 are separate handle elements that are mountable to the housing 102. Accordingly, the separate parts of the first handle 112 on the second handle 114 can be assembled before the first and second handles 112, 114 are mounted on the housing 102.

In some examples, the first and second handles 112, 114 are mounted to the housing 102 with one or more screw fastenings. In some other examples, any other type of fastening arrangement can be used, e.g., adhesive, clips, or clamps or a friction fit etc.

The motor 120 is electrically connected to an electric power source 122. In some examples, the electric power source 122 is a mains electrical supply. In some other examples, the electrical power source 122 is a battery 122. The battery 122 can be removably mountable to the housing 102 or integral to the housing 102. In some examples, the power tool 100 can be powered either from both a battery 122 and / or a mains electrical supply. The motor 120 is connected to a controller 130 (best shown in Figure 2) mounted on a PCB in the housing 102. The controller 130 is configured to issue control instructions to the motor 120 in dependence of the user actuating the main trigger switch 116.

The battery 122 as shown in Figure 1 is securely mounted to a top portion 124 of the housing 102. The battery 122 is configured to power the motor 120 and other electronic components. The battery 122 may comprise lithium-ion cells, nickel-metal hydride cells, or any other type of rechargeable or non-rechargeable power source.

The power tool 100 as shown in Figure 1 is optionally a plunge router 100. However, in some examples, the power tool 100 is not a plunge router 100. Accordingly, the power tool 100 can be selectively operated in different modes. In a first mode, the power tool 100 is in a locked position. In the locked position, the first and second guide posts 108, 110 are fixed with respect to the housing 102. This means that the housing 102 and the collet 104 are fixed with respect to the base portion 106. Accordingly, the cutting tool (not shown) can be maintained at a set height above the workpiece. This means that the user of the power tool 100 can select how far the cutting tool projects through the aperture in the base portion 106.

In a second mode, the power tool 100 is in an unlocked position. In the unlocked position the first and second guide posts 108, 110 are slidable with respect to the housing 102. This means that the user can push down on the first and second handles 112, 114 and the first and second guide posts 108, 110 slide into or through the housing 102. In this way, the distance between the base portion 106 and the housing 102 can be adjusted. This means that the user can position the power tool 100 above the workpiece and then push the housing 102 towards the workpiece and the cutting tool plunges into the workpiece.

As discussed hereinafter, the power tool 100 is configured to be set in a plurality of unlocked positions for different operation modes of the power tool 100.

The user can select between the locked and unlocked position of the power tool 100 by using a locking system (not shown) mounted on the power tool 100. In some examples, the locking system is actuatable with a locking lever 134.

Figure 1 shows the locking lever 134 in a locked position. In some examples, the locking lever 134 is in the locked position in a vertical orientation. The locking lever 134 is mechanically coupled to the first and / or second guide posts 108, 110 such that relative movement of the first and second guide posts 108, 110 is prevented when the locking lever 134 is in the locked position.

In some examples, the locking lever 134 actuates a locking bolt (not shown) to engage the first guide post 108 or the second guide post 110. In this way, the locking bolt exerts a frictional force against the first or second guide posts 108, 110 when the locking lever 134 is in the locked position. Alternatively, the locking bolt can engage a detent or a hole in the first guide post 108 or the second guide post 110.

Accordingly, when the locking lever 134 is in the locked position the locking bolt clamps against or engages the first or second guide posts 108, 110 preventing relative movement therebetween. In some examples the locking lever 134 optionally engages a reciprocal hole or detent (not shown) in the second guide post 110 and the housing 102. In other examples, an additional second locking bolt (not shown) is used to also engage with the first guide post 108 such that both the first and the second guide posts 108, 110 are locked at the same time. In other examples, other mechanisms can be used to lock the first and second guide posts 108, 110 such as a latch-catch mechanism, a ball bearing engaging a detent in the first and second guide posts 108, 110 or any other suitable mechanism.

The locking lever 134 is moveable between the locked position shown in Figure 1 and an unlocked position (not shown). In some examples, the locking lever 134 is rotatable between the locked position and the unlocked position about a rotational axis of the locking lever 134. In some other examples, the locking lever 134 is slidable between the locked position and the first and second unlocked positions. Mechanical linkages (not shown) may be coupled between the locking lever 134 and the locking bolt for actuating engagement between the locking bolt and the first and second guide posts 108, 110.

When the user plunges the housing 102 towards the base portion 106, the collet 104 and the cutting tool project through the base aperture 126. A housing return spring 128 is optionally shown in Figure 2 as is fixed with respect to the first guide post 108 at a first spring end 140 and connected to the housing 102 at a second spring end 142. In some examples the housing return spring 128 is fixed with respect to the first guide post 108 at a first spring end 140 with a first C-clip (not shown) and fixed with respect to the housing 102 at a second spring end 142 with a second C-clip (not shown). Other types of fasteners can be used instead of the first and second c-clips. Accordingly, when the housing 102 is moved towards, the base portion 106, the housing return spring 128 extends and exerts a return force on the housing 102 to return the unplunged position (e.g., the power tool 100 as shown in Figure 1). The housing return spring 128 is shrouded with a bellows 144 to prevent ingress of dirt, debris, or moisture into the housing return spring 128 or other parts of the power tool 100.

In order to adjust the depth of the plunge e.g., how far the collet 104 projects through the base aperture 126, the housing 102 comprises a depth rod 152. The depth rod 152 is configured to engage one or more depth screws 154 of a plunge depth stop mounted on the base portion 106. When the housing 102 is plunged towards the base portion 106, the housing 102 is prevented from moving further towards the base portion 106 when the depth rod 152 engages the depth screws 154 of the plunge depth stop. The amount the depth rod 152 extends towards the base portion 106 is adjustable by the user. Furthermore, the amount the depth screws 154 project towards the housing 102 from the base portion 106 are also adjustable by the user. For the purposes of clarity only one of the depth screws 154 are labelled. The plunge depth stop, the depth screws 154 and the depth rod 152 are known and will not be described in any further detail.

Turning back to Figure 1, the power tool 100 comprises a dust extraction conduit 136. The dust extraction conduit 136 is connectable to a vacuum source such as a workshop vacuum. The first guide post 108 is hollow and comprises a first guide post conduit 138 which is in fluid communication with the dust extraction conduit 136 at a first end of the first guide post 108. The second end of the first guide post 108 is in fluid communication with the base portion 106 and the cutting tool. In this way, the first guide post conduit 138 couples the vacuum source via the dust extraction conduit 136 to the base portion 106. This means cutting chips and other debris from the workpiece can be collected and extracted during operation.

The base portion 106 provides a stable and flat surface in a plane parallel with axis A-A (as shown in Figure 2). The base portion 106 is arranged to be positioned and secured against the workpiece during operation of the power tool 100. The base portion 106 may comprise a first base side 158 facing away from the workpiece, and a second base side 160 facing towards the workpiece. The base portion 106 may be formed from any suitable material such as metal, plastic, composite, or any combination thereof. The dimensions and geometrical features of the base portion 106 may be configured to ensure proper compatibility with a variety of accessories, as discussed below.

The base portion 106 may optionally comprise a plurality of mounting features, such as holes, slots, or recesses, which enable the secure attachment of other components such as a sub-base adapter 162. These mounting features may be arranged in a predetermined pattern or layout, which corresponds to complementary features on the sub-base adapter 162 for proper alignment and mounting.

The base portion 106 of the power tool 100 may be integrally formed with the housing 102 or may be a separate component that is securely attached or connected to the main body of the housing 102 as shown in the accompanying Figures. Figure 1 shows the first guide post 108 and the second guide post 110 fixed with respect to the base portion 106.

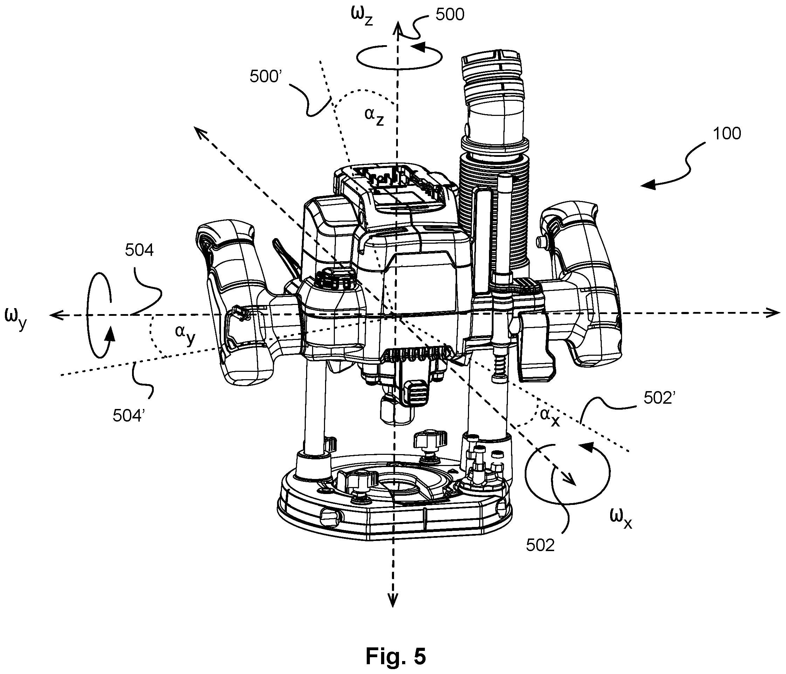

Figure 5 shows a perspective view of the power tool 100 with a plurality of axes of rotation and angles of inclination according to an example. The power tool 100 includes a first axis 500, a second axis 502, and a third axis 504. The first axis 500 is parallel with the rotation axis A-A of the cutting tool, the second axis 502 is perpendicular to the rotation axis A-A of the cutting tool and parallel with the surface of the workpiece, and the third axis 504 is perpendicular to the rotation axis A-A of the cutting tool and parallel with the surface of the workpiece.

During operation, the user can manipulate the power tool 100 such that the power tool 100 is moved about one or more of the first axis 500, the second axis 502, and the third axis 504 as shown in Figure 5. Accordingly, the user can rotate the power tool 100 about the first axis 500, the second axis 502, and the third axis 504 and / or translate the position of the power tool 100 along one or more of the first axis 500, the second axis 502, and the third axis 504. This is significant when the power tool 100 is a router because the user is free to manipulate the power tool 100 with respect to the workpiece. Often, the power tool 100 is held in the hands with the first and second handles 112, 114 and moved with respect to the workpiece.

One or more sensors, which are described in more detail below, are used to determine the angular rotation and inclination of the housing 102 with respect to the workpiece. The detected movement of the housing 102 with respect to the first, second and third axes 500, 502, 504 can be used for detecting error conditions such as kickback events, tilting of the power tool 100, and excessive linear acceleration, which can lead to potential damage to the workpiece or injury to the user.

In one or some examples, the first axis 500 is parallel to the rotation axis of the cutting tool. The first axis 500, is also known as the Z-axis and the position of the power tool 100 along the Z-axis determines the height of the power tool 100 above the workpiece. Rotation about the first axis 500 is indicated by the angular velocity ω_{z}.

Angular inclination angular inclination of the first axis 500 from a reference first axis is indicated by the first axis angular inclination α_{z}. The reference first axis as shown in Figure 5 is aligned with the first axis 500. This is because the power tool 100 as shown in Figure 5 is in a neutral position with no inclination to the vertical or horizontal.

However, the exemplary inclined first axis 500' is shown which is inclined to the reference first axis by an angle of α_{z}.

By monitoring the angular rotation and inclination along the first axis 500, the power tool 100 can detect sudden changes in angular velocity and tilted, which may indicate a kickback event or improper handling of the power tool 100. This is discussed in more detail below.

In one or some examples, the second axis 502 is perpendicular to the rotation axis A-A of the cutting tool and parallel to the surface of the workpiece. The second axis 502, is also known as the X-axis and the position of the power tool 100 along the X-axis determines the position of the power tool 100 within the plane of the workpiece. Rotation about the second axis 502 is indicated by the angular velocity ωₓ.

Angular inclination of the second axis 502 from a reference second axis is indicated by the second axis angular inclination αₓ. The reference second axis as shown in Figure 5 is aligned with the second axis 502. This is because the power tool 100 as shown in Figure 5 is in a neutral position with no inclination to the vertical or horizontal. However, the exemplary inclined second axis 502' is shown which is inclined to the reference second axis by an angle of αₓ.

Monitoring the angular rotation and inclination along the second axis 502 enables the power tool 100 to detect improper gripping and tilting of the power tool 100 with respect to the workpiece. This information can be used to notify the user of the second error condition and help prevent damage to the workpiece or injury to the user. This is discussed in more detail below.

In one or some examples, the third axis 504 is perpendicular to the rotation axis A-A of the cutting tool and parallel to the surface of the workpiece. The third axis 504, is also known as the Y-axis and the position of the power tool 100 along the Y-axis determines the position of the power tool 100 within the plane of the workpiece. Rotation about the third axis 502 is indicated by the angular velocity ω_{y}.

Angular inclination angular inclination of the third axis 504 from a reference third axis is indicated by the third axis angular inclination α_{y}. The reference third axis as shown in Figure 5 is aligned with the third axis 504. This is because the power tool 100 as shown in Figure 5 is in a neutral position with no inclination to the vertical or horizontal. However, the exemplary inclined third axis 504' is shown which is inclined to the reference third axis by an angle of α_{y}.

By monitoring the angular rotation and inclination along the third axis 504, the power tool 100 can again detect improper handling of the power tool 100 with respect to the workpiece, such as moving the power tool 100 too quickly or applying excessive force. This information can be used to notify the user of the second error condition and help prevent damage to the workpiece or injury to the user. This is discussed in more detail below.

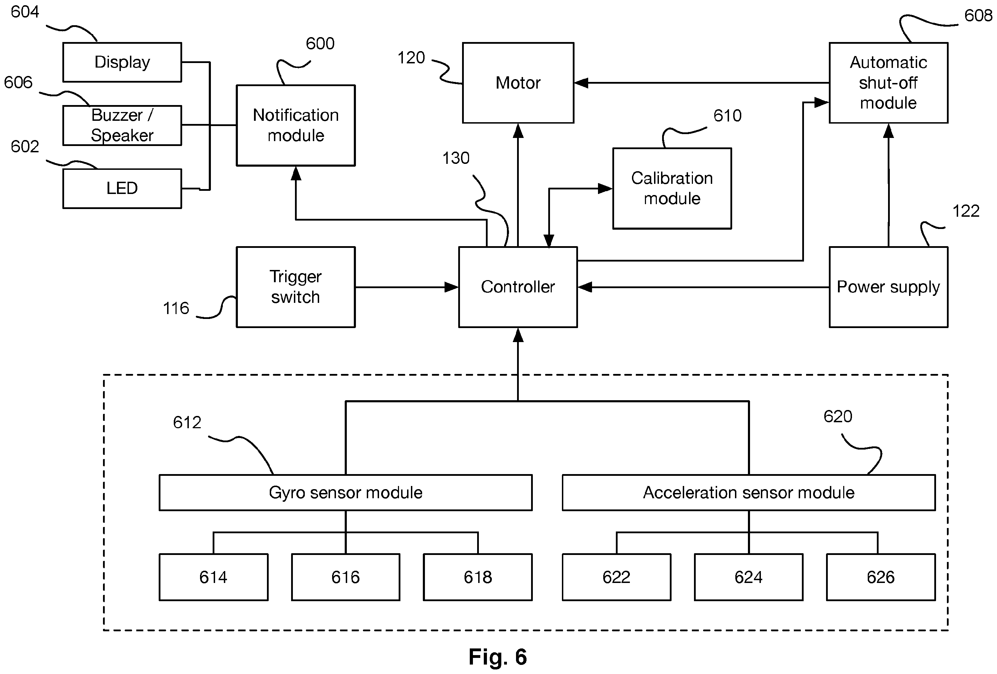

Figure 6 shows a schematic example of the power tool 100 according to an example. The power tool 100 includes a controller 130 configured to receive sensor signals from a gyro sensor module 612 and an accelerometer sensor module 620. The controller 130 is further configured to determine error conditions of the power tool 100 based on threshold values for angular velocity, angular inclination, and linear acceleration. The power tool 100 also includes a notification module 600 and an automatic shut-off module 608.

In some examples, the controller 130 is configured to receive sensor signals from the gyro sensor module 612 and the accelerometer sensor module 620. The controller 130 processes the received sensor signals to determine if any error conditions are present in the operation of the power tool 100.

The error conditions may include, but are not limited to, kickback events, tilting of the power tool 100 with respect to the workpiece, and excessive linear acceleration of the power tool 100 with respect to the workpiece. The controller 130 may also be configured to determine customizable threshold values for angular velocity, angular inclination, and linear acceleration for different power tool models and user preferences.

In some examples, the gyro sensor module 612 is mounted on the housing 102 of the power tool 100. The gyro sensor module 612 includes at least one gyro sensor 614 configured to detect angular rotation of the housing 102 about the first axis 500 and angular inclination of the first axis 500 from the reference first axis.

The gyro sensor module 612 may also include a second gyro sensor 616 configured to detect angular rotation of the housing 102 about the second axis 502 and angular inclination of the second axis 502 from the reference second axis.

Additionally, the gyro sensor module 612 may include a third gyro sensor 618 configured to detect angular rotation of the housing 102 about the third axis 504 and angular inclination of the third axis 504 from a reference third axis. The gyro sensor module 612 may be one or more of a MEMS gyro sensor module, a mechanical gyro sensor module, and a digital gyro sensor module.

The gyro sensor module 612 provides accurate detection of the power tool 100 rotational and tilting movement with respect to the workpiece, allowing for the detection of error conditions such as kickback events and tilting of the power tool 100. This advantageously reduces the risk of injury to the user and damage to the workpiece.

Optionally, in some examples, the accelerometer sensor module 620 is mounted on the housing 102 of the power tool 100. The accelerometer sensor module 620 is configured to detect linear acceleration of the housing 102 with respect to a workpiece in a direction parallel to the first axis 500, the second axis 502, and/or the third axis 504.

The accelerometer sensor module 620 may include a first accelerometer sensor 622 configured to detect linear acceleration in a direction parallel to the first axis 500 of the housing 102 with respect to the workpiece, a second acceleration sensor 624 configured to detect linear acceleration in a direction parallel to the second axis 502 of the housing 102 with respect to the workpiece, and a third acceleration sensor 626 configured to detect linear acceleration in a direction parallel to the third axis 504 of the housing 102 with respect to the workpiece.

The accelerometer sensor module 620 may be one or more of a piezoelectric accelerometer sensor module, a capacitive accelerometer sensor module, a MEMS accelerometer sensor module, and a piezoresistive accelerometer sensor module.

The accelerometer sensor module 620 provides accurate detection of the power tool 100 movement with respect to the workpiece, allowing for the detection of error conditions such as excessive linear acceleration of the power tool 100. This advantageously reduces the risk of injury to the user and damage to the workpiece.

In some examples, the power tool 100 may comprise a calibration module 610 configured to determine reference first, second and third axes for the housing 102 when the power tool 100 is powered on. The calibration module 610 may be used to establish a zero-degree tilt reference for each axis, allowing for more accurate detection of angular inclination and error conditions related to the tilting of the power tool 100 with respect to the workpiece.

The calibration module 610 may determine the real time sensor signals from the gyro sensor module 612 and the accelerometer sensor module 620. In some examples, the user may be required to position the power tool 100 in a rest position without moving the power tool 100. This is so the calibration module 610 can set the reference axes values e.g. the ground-truth tilt of the power tool 100 when at rest on a horizontal surface is zero degrees of inclination and zero acceleration. In some examples, the user can calibrate the power tool 100 with the calibration module 610 at an inclination, for example the workpiece may be inclined and therefore the calibration module 610 sets the reference first, second and third axes with respect to the workpiece. In other words, the calibration module 610 sends a signal to the controller 130 that the reference first axis is parallel to the normal of the workpiece. Accordingly, the controller 130 is configured to determine the inclination of the power tool 100 with respect to the workpiece and not a horizontal plane.

As shown in Figure 6, in some examples, the power tool 100 may comprise a notification module 600 configured to indicate an error condition of the power tool 100 in response to a notification signal received from the controller 130 based on a detected error condition of the power tool 100. The notification module 600 may comprise one or more of an LED 602, an LCD display 604, a buzzer or speaker 606, and a haptic feedback device. These notification devices can provide visual, auditory, and/or tactile feedback to the user, alerting them to the detected error condition and allowing them to take corrective action.

In some examples, the power tool 100 may also comprise an automatic shut-off module 608 configured to stop the motor 120 in response to a control signal received from the controller 130 in response to an error condition of the power tool 100 being detected. This automatic shut-off feature can help prevent injury to the user and damage to the workpiece by stopping the cutting tool from rotating when an error condition is detected. In some examples, the automatic shut-off module 608 is optional and this functionality is performed by the controller 130 itself.

Various methods will now be discussed for the controller 130 to determine one or more error conditions of the power tool 100 based on the sensor signals from the gyro sensor module 612, and alternatively or additionally from the accelerometer sensor module 620.

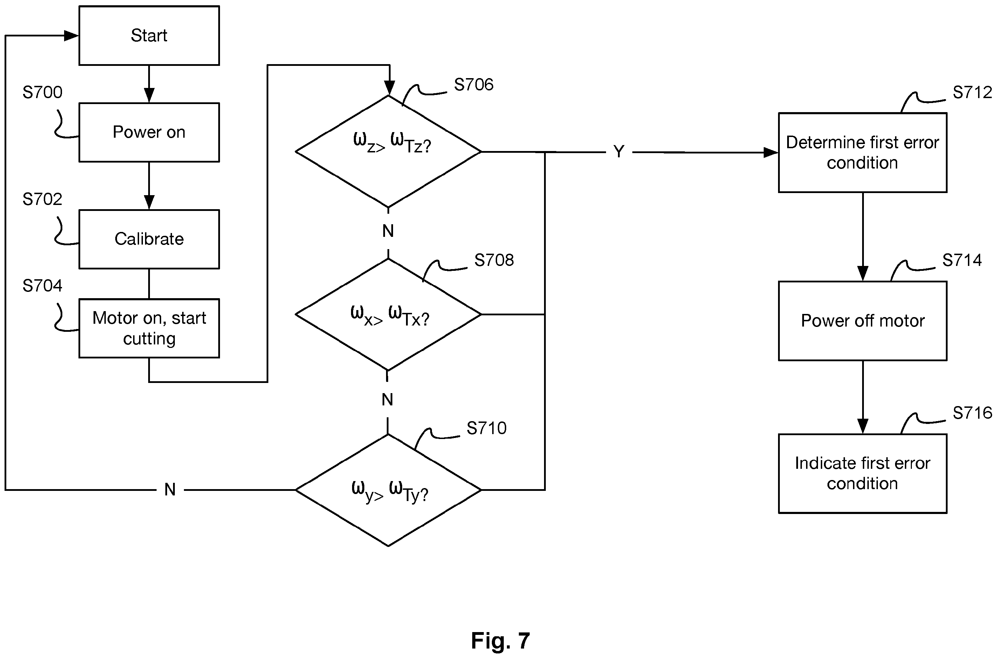

Figure 7 shows a method of determining a first error condition of the power tool 100 based on determining angular velocity of the power tool 100 in multiple axes.

In one example, the power tool 100 is configured to detect and respond to various error conditions during its operation. These error conditions may include a kickback event, tilting of the power tool 100 with respect to the workpiece, and excessive linear acceleration of the power tool 100. The detection and response to these error conditions can help reduce the risk of injury to the user and damage to the workpiece.

In Figure 7, the user turns on the power tool 100 as indicated by the step labelled "Start".

In one example, a method for determining a first error condition of the power tool 100 based on angular velocity involves several steps. The method begins with powering on the power tool 100 and the gyro sensor module 612 as shown in step S700. Next, the gyro sensor module 612 is calibrated, and at least the reference first axis for the power tool 100 is determined as shown in step S702. The reference second axis and the reference third axis for the power tool 100 can also be determined by the calibration module 610 in step S702. During the operation of the power tool 100, the controller 130 receives sensor signals from the gyro sensor module 612 as shown in step S704.

This means that the controller 130 is constantly or periodically determining the angular rotation of the housing 102 about one or more of the first, second and third axes 500, 502, 504 and the angular inclination of the housing 102 about the same axes.

The method then involves determining whether the angular velocity ω_{z} of the power tool 100 in the first axis 500 exceeds a threshold first axis angular velocity ω_{Tz} as shown in step S706.

Similarly, the method determines whether the angular velocity ωₓ in the second axis 502 exceeds a threshold second axis angular velocity ω_{Tx} in step S708.

Furthermore, the method determines whether the angular velocity ω_{y} in the third axis 504 exceeds a threshold third axis angular velocity ω_{Ty} in step S710. In some examples, the threshold values for angular velocity may be customizable for different power tool models and user preferences. In some examples, the controller 130 may permit the user to adjust the threshold values for angular velocity in one or more axes when the calibration module 610 is operating in step S702. Alternatively, the threshold values for angular velocity may be set during a factory setting process and not customizable by the user.

Steps S706, S708, S710 can be performed sequentially as shown in Figure 7, sequentially in a different order than shown in Figure 7 e.g. step S710 before step S708 or S706 or step S708 before step S710 or S706. Alternatively, steps S706, S708, S710 can be performed in parallel.

If the threshold angular velocity ω_{Tz} ω_{Tx} ω_{Ty} is exceeded in any of the first, second, or third axes, the method determines the presence of a first error condition as shown in step S712.

In this case, since the controller 130 has determined that the angular velocity of the power tool 100 is excessive about the first axis 500 and /or the second and third axes 502, 504, controller 130 may determine that the power tool is experiencing a kickback event. The kickback event can occur when the cutting tool gets caught in the workpiece, causing a sudden rotation of the power tool 100. Detecting and responding to kickback events can help reduce the risk of injury to the user and damage to the workpiece.

Upon detecting the first error condition, the method may activate an automatic shut-off module 608 to stop the motor 120 as shown in step S714. This can help prevent further damage or injury caused by the kickback event.

Additionally, the method may optionally involve indicating the first error condition to the user through a notification module 600 as shown in step S716. The notification module 600 may comprise one or more of an LED 602, an LCD display 604, a buzzer or speaker 606, and a haptic feedback device.

In some examples, the threshold values for angular velocity may be different for each axis. For instance, the threshold value for angular velocity ω_{Tz} in the first axis 500 may be different from the threshold values for angular velocity ω_{Tx} in the second axis 502 and the threshold value for angular velocity ω_{Ty} in the third axis 504. The threshold values for angular velocity ω_{Tx} ω_{Ty} in the second and third axes 502, 504 may be in the range of 10-50 degrees per second, while the threshold value for angular velocity ω_{Tz} in the first axis 500 may be in the range of 50-100 degrees per second. These threshold values may be customizable for different router models and user preferences.

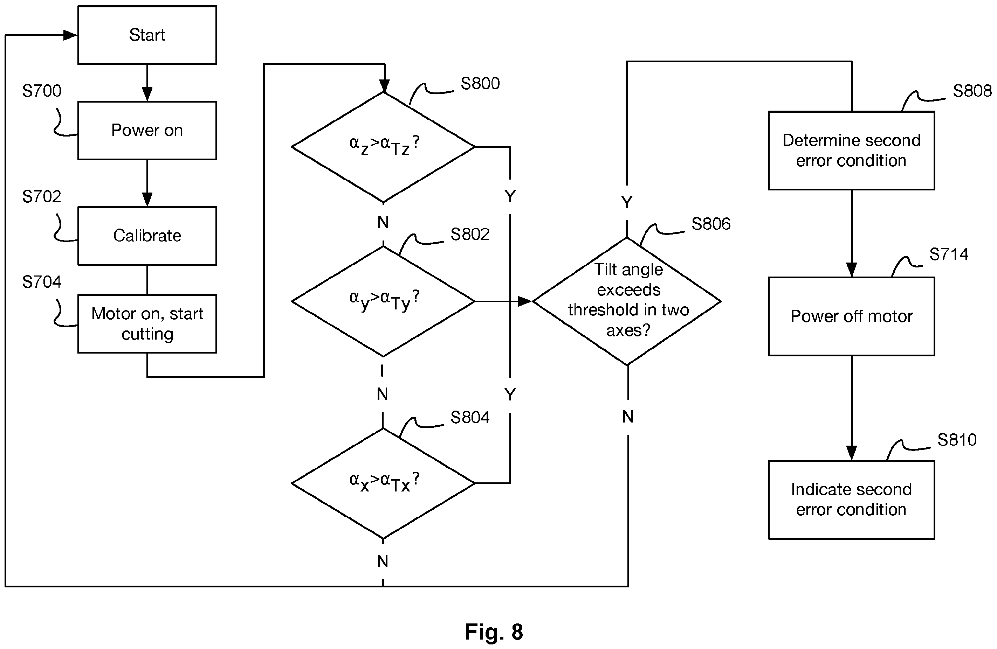

Figure 8 shows a method of determining a second error condition of the power tool 100 based on determining the angle of inclination of the power tool in multiple axes.

The method as shown in Figure 8 is substantially the same as shown in Figure 7. The differences between Figures 7 and 8 will be discussed now.

Steps S700, S702, S704, S714 are the same as discussed previously.

In some examples, a method for determining a second error condition of the power tool 100 based on angular inclination involves several steps. The method starts with determining whether the angular inclination α_{z} of the first axis 500 from the reference first axis exceeds a first axis angle threshold α_{Tz} as shown in step S800.

Similarly, the method determines whether the angular inclination αₓ of the second axis 502 from the reference second axis exceeds a second axis angle threshold α_{Tx} as shown in step S802.

The method also determines whether the angular inclination α_{y} of the third axis 504 from the reference third axis exceeds a third axis angle threshold α_{Ty} as shown in step S804. In some examples, the threshold values for angular inclination may be customizable for different power tool 100 models and user preferences.

The method then involves optionally determining whether the angular inclination of the power tool 100 exceeds the angular thresholds in at least two axes as shown in step S806. If the threshold angular inclination is exceeded in at least two axes, the method determines the presence of a second error condition as shown in step S808. In some examples, the method may omit step S806, for example, the angle of inclination of the housing about one axis is sufficiently excessive. In this case, the method goes from steps S800, S802, S804 directly to step S808.

Likewise, steps S800, S802, S804 can be performed sequentially as shown in Figure 8, sequentially in a different order than shown in Figure 8 e.g. step S804 before step S800 or S802 or step S802 before step S804 or step S800. Alternatively, steps S800, S802, S804 can be performed in parallel.

The second error condition may be the power tool 100 being tilted with respect to the workpiece, which can result from improper gripping or handling of the power tool 100 by the user.

Upon detecting the second error condition, the method may involve indicating the second error condition to the user through the notification module 600 as shown in step S810. This can help the user correct their grip or handling of the power tool 100 to prevent potential damage to the workpiece or injury to the user. It may also prevent the user from subsequently experiencing a kickback event due to their improper handling of the power tool 100.

In some examples, the threshold values α_{Tz} α_{Tx} α_{Ty} for angular inclination may be different for each of the first, second or third axis 500, 502, 504. For instance, the threshold value α_{Tx} for angular inclination along the second axis 502 and the threshold value α_{Ty} for angular inclination α_{y} along the third axis 504 may be +/- 5 degrees. In contrast, the threshold value α_{Tz} for angular inclination α_{z} along the first axis 500 may be +/- 10 degrees. These threshold values α_{Tz} α_{Tx} α_{Ty} may be customizable for different power tool 100 models, workpiece shapes and forms, and user preferences.

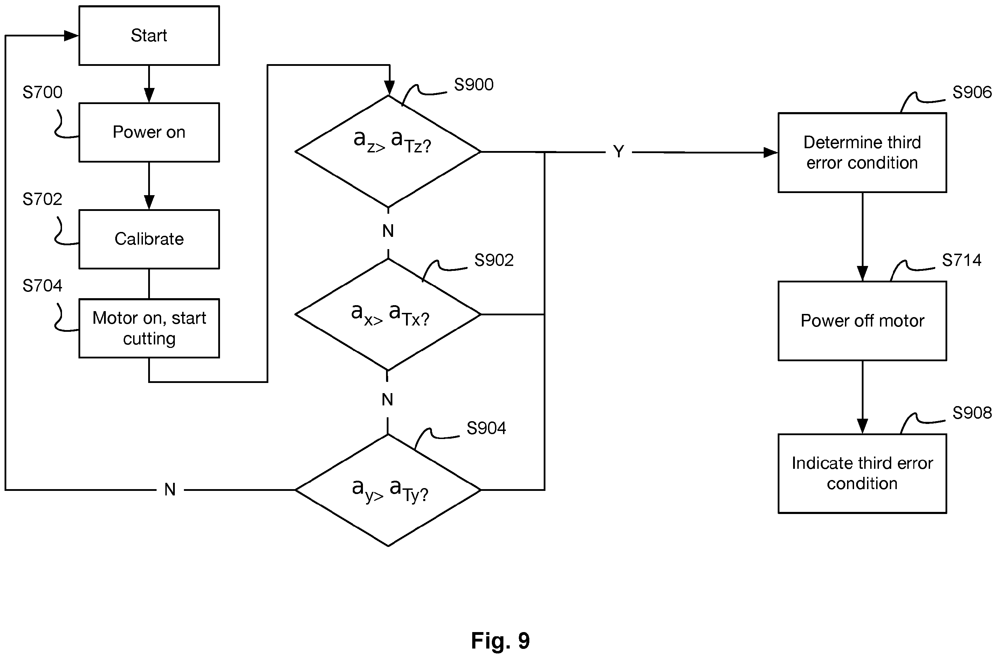

Figure 9 shows a method of determining a third error condition of the power tool 100 based on determining linear acceleration of the power tool in multiple axes. The method as shown in Figure 9 is substantially the same as shown in Figure 7. The differences between Figures 7 and 9 will be discussed now.

Steps S700, S702, S704, S714 are the same as discussed previously.

In some examples, the power tool 100 is configured to detect improper handling of the power tool 100 with respect to the workpiece, such as moving the power tool 100 too quickly or with excessive force.

In some examples, a method for determining a third error condition of the power tool 100 based on linear acceleration involves several steps.

The method starts with determining whether the linear acceleration a_{z} of the housing 102 along the first axis 500 exceeds a first linear acceleration threshold a_{Tz} in step S900. Similarly, the method determines whether the linear acceleration aₓ along the second axis 502 exceeds a second linear acceleration threshold in step S902. The method also determines whether the linear acceleration a_{y} along the third axis 504 exceeds a third linear acceleration threshold a_{Ty} as shown in step S904. In some examples, the threshold values for linear acceleration may be customizable for different power tool 100 models and user preferences.

Similarly, steps S900, S902, S902 can be performed sequentially as shown in Figure 9, sequentially in a different order than shown in Figure 9 e.g. step S904 before step S902 or S900 or step S902 before step S904 or S900. Alternatively, steps S900, S902, S904 can be performed in parallel.

If the threshold linear acceleration is exceeded in any of the first, second, or third axes, the method determines the presence of a third error condition as shown in step S906. The third error condition may be the power tool 100 being moved with respect to the workpiece too quickly, which can result from improper handling of the power tool 100 by the user.

Upon detecting the third error condition, the method may involve indicating the third error condition to the user through the notification module 600 as shown in step S908. This can help the user adjust their handling of the power tool 100 to prevent potential damage to the workpiece or injury to the user.

In some examples, the threshold values for linear acceleration may be different for each axis. For instance, the threshold value for linear acceleration along the second axis 502 and the threshold value for linear acceleration a_{Ty} along the third axis 504 may be in the range of 1-5 m/s, while the threshold value for linear acceleration a_{Tz} along the first axis 500 may be in the range of 5-10 m/s. These threshold values may be customizable for different power tool models and user preferences.

When the controller 130 determines that the linear acceleration of the housing 102 exceeds the threshold value along one or more of the first, second, and third axes 500, 502, 504, it identifies a third error condition, which may be the power tool being moved with respect to the workpiece too quickly. The detection of improper handling of the power tool 100 allows the user to correct their handling technique, reducing the risk of injury and damage to the workpiece.

Furthermore, the controller 130 is configured to perform the methods as shown in Figures 7, 8 and 9 in parallel. Alternatively, the controller 130 can perform two of the methods at the same time e.g. the methods shown in Figures 7 and 8, or Figures 7 and 9, or Figures 8 and 9. This means that the controller 130 can determine a kickback event, excessive tilting and / or excessive acceleration or force of the housing 102 at the same time. This makes for a safer power tool 100 and protects the user, the power tool 100 and the workpiece during operation.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power tool (100) comprising:
a housing (102);
a motor (120) mounted in the housing (102);
a tool holder (304) operatively coupled to the motor (120);
a gyro sensor module (612) mounted on the housing (102), the gyro sensor module (612) comprising at least one gyro sensor (614) configured to detect angular rotation of the housing (102) about a first axis (500) and angular inclination of the first axis (500) from a reference first axis; and
a controller (130) configured to receive sensor signals from the gyro sensor module (612), determine a first error condition of the power tool (100) based on a threshold angular velocity being exceeded, and determine a second error condition of the power tool (100) based on a threshold angular inclination being exceeded.

2. The power tool (100) of claim 1, wherein the gyro sensor module (612) further comprises either 1) a second gyro sensor (616) configured to detect angular rotation of the housing (102) about a second axis (502) and angular inclination of the second axis (502) from a reference second axis; and/or 2) a third gyro sensor (618) configured to detect angular rotation of the housing (102) about a third axis (504) and angular inclination of the third axis (504) from a reference third axis.

3. The power tool (100) of any one of claims 1 or 2, further comprising an accelerometer sensor module (620) mounted on the housing (102), the accelerometer sensor module (620) configured to detect linear acceleration of the housing (102) with respect to a workpiece in a direction parallel to the first axis (500), the second axis (502) and / or the third axis (504).

4. The power tool (100) of claim 3, wherein the controller (130) is further configured to determine a third error condition of the power tool (100) based on a threshold linear acceleration being exceeded.

5. The power tool (100) of any one of claims 1 to 4, further comprising a notification module (600) configured to indicate an error condition of the power tool (100) in response to a notification signal received from the controller (130) based on a detected error condition of the power tool (100).

6. The power tool (100) of claim 5, wherein the notification module (600) comprises at least one of an LED (602), an LCD display (604), a buzzer or speaker (606), and a haptic feedback device.

7. The power tool (100) of any one of claims 1 to 6, further comprising an automatic shut-off module (608) configured to stop the motor (120) in response to a control signal received from the controller (130) in response to an error condition of the power tool (100) being detected.

8. The power tool (100) of any one of claims 1 to 7, wherein the first error condition is a kickback event; and/or the second error condition is the power tool (100) being tilted with respect to the workpiece.

9. The power tool (100) of any one of claims 1 to 8, wherein the controller (130) is further configured to determine reference axes for the housing (102) when the power tool (100) is powered on.

10. The power tool (100) of any one of claims 1 to 9, wherein the first axis (500) is parallel with the rotation axis of the tool holder (104).

11. The power tool (100) of any one of claims 1 to 10, wherein the threshold values for angular velocity, angular inclination, and linear acceleration are customizable for different power tools (100) and user preferences.

12. The power tool (100) of any one of claims 1 to 11, wherein the gyro sensor module (612) is one or more of a MEMS gyro sensor module, a mechanical gyro sensor module, and a digital gyro sensor module, and/or, the accelerometer sensor module (620) is one or more of a piezoelectric accelerometer sensor module, a capacitive accelerometer sensor module, a MEMS accelerometer sensor module, and a piezoresistive accelerometer sensor module.

13. A method of using a power tool (100) having a gyro sensor module (612) having at least one gyro sensor (614) mounted to a housing (102) configured to detect angular rotation of the housing (102) about a first axis (500) and angular inclination of the first axis (500) from a reference first axis of the power tool (100), the method comprising:
powering on the power tool (100) and the gyro sensor module (612);
calibrating the gyro sensor module (612) and determining the reference first axis for the power tool (100);
receiving sensor signals from the gyro sensor module (612) at a controller (130) during operation of the power tool (100);
determining a first error condition of the power tool (100) based on a threshold angular velocity being exceeded; and
determining a second error condition of the power tool (100) based on a threshold angular inclination being exceeded; and
indicating the first error condition and/or the second error condition to a user.

14. The method of claim 13, further comprising stopping the motor (120) in response to a control signal received from the controller (130) in response to an error condition of the power tool (100) being detected.

15. The method of claim 13 or 14, further comprising detecting linear acceleration of the housing (102) with respect to the workpiece in a direction parallel to a first axis (500), a second axis (502), and/or a third axis (504) using an accelerometer sensor module (620) mounted on the housing (102).

16. The method of any one of claims 13 to 15, further comprising determining a third error condition of the power tool (100) based on a threshold linear acceleration being exceeded.

17. The method of any one of claims 13 to 16, wherein the first error condition is a kickback event and the second error condition is the power tool (100) being tilted with respect to the workpiece.
